# EUROPEAN PATENT SPECIFICATION

(11) **EP 2 390 498 B1**
(45) Date of publication and mention of the grant of the patent: **22.02.2017**
(21) Application number: 10164062.1
(22) Date of filing: 27.05.2010
(51) Int. Cl.: F03D 1/06

(54) **Wind turbine blade with coating for lightning protection and method for manufacturing the wind turbine blade**
Windturbinenschaufel mit Beschichtung zum Blitzschutz und Verfahren zur Herstellung der Windturbinenschaufel
Pale d'éolienne dotée d'un revêtement pour la protection contre la foudre et procédé de fabrication de la pale d'éolienne

(43) Date of publication of application: 30.11.2011
(73) Proprietor: Siemens Aktiengesellschaft, 80333 München (DE)
(72) Inventor: Krug, Florian, 81243, München (DE); Lewke, Bastian, 7400, Herning (DK)

(56) References cited:
- EP-A1- 1 826 402
- WO-A1-2005/050808
- WO-A1-2008/056123
- WO-A2-2010/028653
- US-A- 4 155 896

## Description

### BACKGROUND OF THE INVENTION

### 1. Field of the Invention

This invention relates to a wind turbine blade with a conductively doped coating for lightning protection of the wind turbine blade. Moreover a method for manufacturing the wind turbine blade is presented.

### 2. Description of the Related Art

A blade material of a wind turbine blade, e.g. GFRP (glass fiber reinforced polymer), can be destroyed by a lightning stroke (e.g. composed by a leader and a return stroke). Therefore a wind turbine blade usually has a lightning protection system.

The lightning protection system consists of lightning receptors at a blade surface of the blade. Inside the blade there are conductors with conductive material connected to the receptors. Via the conductors lightning current which is caused by a direct lightning stroke into the receptors can be diverted.

An area of the receptors is limited leading to a relatively small safe contact surface for the lightning stroke (few square centimeters) compared to the whole blade surface (e.g. 100 square meters). Due to that fact a probability for a direct lightning stroke into the lightning receptors is relatively low. As a consequence a puncture of the blade material caused by a lightning stroke into the blade surface cannot be avoided.

DE 10 2006 044 323 A1 discloses a wind turbine blade with a special lightning protection system. Thereby the wind turbine blade has a base body with a base material and a coating of the base body with a coating material. The coating material comprises a composite material. A main material of the composite material is a ceramic material. In this ceramic material conductive particles are distributed. The conductive particles comprise iron.

A wind turbine blade with a similar lightning protection system is described in WO 2005/050808 A1. The base body of the wind turbine blade comprises conducting metal ribbons. In order to improve the conducting capability the metal ribbons comprise conducting cover layers.

An alternative lightning protection system for a wind turbine blade is known from WO 2008/056123 A1. By the structure of the blade a potential equalisation is ensured. A lightning protection system on wind turbine blades with potential equalization is also known from EP 1 826 402 A1. This is ensured by carbon fiber laminates which are electrically connected to each other.

Finally WO 2010/028653 A2 discloses a wind turbine blade which comprises areas of an external surface of the blade which are covered by electrical conductive nano particles like carbon nanotubes. The areas with the conductive nano particles act as elements of a lightning protection system.

While rotating the wind turbine blade vibrations of the wind turbine blade occur. Due to the brittleness of the ceramic material a probability of mechanical spalling of the coating known from DE 10 2006 044 323 A1 is relatively high. The reliability of the lightning protection system is reduced.

### SUMMARY OF THE INVENTION

It is an object of the invention to provide a wind turbine blade with an efficient and more reliable lightning protection system compared to the known state of the art.

Another object of the invention is the providing of a method for manufacturing such a wind turbine blade.

These objects are achieved by the invention specified in the claims.

### BRIEF DESCRIPTION OF THE INVENTION

The invention provides a wind turbine blade according to claim 1, the blade having a base body with a base material and at least one coating of the base body with a coating material, wherein the base material comprises a composite material with fiber glass and the coating material comprises a composite material with conductive particles. The wind turbine blade is characterized in that the composite material of the coating material comprises the base material of the base body.

The composite material comprises the base material of the base body. This reduces a thermal mismatch between the base material and the composite material. The structural stability of the assembly is improved.

Preferably the fiber glass form a glass fiber mat. A glass fiber mat is used. The coating of the wind turbine blade is conductively doped.

Preferably the conductive particles comprise a highly conductive metal like copper or silver. Other metals like iron, antimony or an alloy consisting different metals are possible, too. An average diameter of the particles ranges from nanometer to millimeter. Preferably the diameter of the particles is selected from the range between 10 µm to 500 µm.

Additionally the invention provides a method for manufacturing such a wind turbine blade. The method comprises following steps: a) Providing the base body of the wind turbine blade; and b) Applying the coating on a surface of the base body. In a preferred embodiment the applying of the coating comprises an applying of the fiber glass on the surface of the base body. After that a main material (or a precursor material of the main material) of the composite material will be applied. A simultaneously applying of glass fiber and main material of the composite material is possible, too. Moreover in a fist step the main material can be applied on the surface of the base body. After that the fiber glass can be applied.

In a preferred embodiment a particle percentage of the conductive particles in the composite is selected from the range from 20 wt% (weight per cent) to 50 wt% and in particular from 25 wt% to 40 wt% of the composite. In particular, a higher particle percentage is possible, too. In a further preferred embodiment the coating has a coating thickness selected from the range from 50 µm to 500 µm. For instance the coating thickness is 100 µm. This results in a flexible coating with a high ampacity.

By using fiber glass the coating of the base body of the wind turbine blade is more flexible than the coating of the above described state of the art. The probability of mechanical spalling due to vibrations of the wind turbine blade is reduced. Concurrently based of the conductive particles the coating can act as an efficient protective coating for lightning strokes. A resistance of the base material of the base body of the wind turbine blade, e.g. a polymer material, is much higher than a resistance of the coating material. By that lightning current can be guided via the coating. The lightning current is not guided through the base body of the wind turbine blade. Therefore the probability of a puncture of a wind turbine blade with such a coating is reduced in comparison to the probability of a puncture of a wind turbine blade without such a coating.

In view of a low resistance of the coating it is preferred that at least a part of the conductive particles is in contact with each other. This results in highly conductive junctions between the conductive particles.

In a preferred embodiment the fiber glass comprise an epoxy coating. The fiber glass are coated by an epoxy. A surface of the fiber glass are covered by an epoxy. For instance the fiber glass are impregnated with an epoxy casting resin before or after the applying the fiber glass on the surface of the base body. The epoxy coating of the fiber glass leads to a higher flexibility of the coating of the base body in comparison to a coating of the base body with fiber glass without an epoxy coating. Moreover the bonding between the fiber glass and the surface of the base body and therefore the bonding between the coating and the surface of the base body is improved by the epoxy coating of the fiber glass. This leads to robust assembly.

In a further preferred embodiment the epoxy coating comprises the conductive particles. Fiber glass with an epoxy coating having the conductive particles are used. By that the conductive particles can be selectively distributed in the composite. For instance after applying the epoxy resin on the glass fiber mat conductive particles are deposited on the non cured resin. The conductive particles are arranged along s structure which is given by the fiber glass and the glass fiber mat respectively.

According to the invention the base material comprises GFRP. The base material of the wind turbine blade comprises fiber glass. Since fiber glass is also used for the coating of the base body of the wind turbine blade a very stable assembly results.

In a preferred embodiment the coating of the base body of the wind turbine blade is electrically connected to a lightning receptor. Thereby the coating of the base body of the wind turbine blade and the lightning receptor can be directly arranged to each other. Alternatively at least one diverter is arranged between the coating and the lightning receptor . The diverter guides the lightning current from the coating to the lightning receptor. Moreover the diverter can be carried out by the coating.

### BIEF DESCRIPTION OF THE DRAWING

Further features and advantages of the invention are disclosed by the description of exemplary embodiments with reference to the schematic drawings.
Figure 1 shows a detail of a side cut of a first embodiment of a wind turbine blade with a conductively doped coating.
Figure 2 shows a detail of a side cut of a second embodiment of a wind turbine blade with a conductively doped coating.

### DETAILED DESCRIPTION OF THE INVENTION

Given is a wind turbine blade 1. The wind turbine blade 1 has a base body 11. The base material of the base body comprises GFRP.

On a surface 111 of the base body a coating 12 is arranged. The coating material of the coating comprises a composite material. The composite material comprises a (not shown) glass fiber mat and conductive particles 13. The fiber glass are coated by an epoxy. The particle material of the conductive particles is silver. The average diameter of the particles is about 100 µm. The blade material of the wind turbine blade is GFRP.

The wind turbine blade 1 has a lightning protection system. This lightning protection system comprises a lighting receptor 2 which is integrated into the wind turbine blade 1. A receptor surface 211 of the lightning receptor 2 and a blade surface 101 of the wind turbine blade 1 which is formed by the coating 12 are flushed with each other.

The lightning receptor 2 is made out of one piece comprising a metal as receptor material. The lightning receptor 2 is connected to inner conductors 21 comprising conductive material of the blade 1.

The lightning receptor and the coating are electrically connected with each other. For a well-directed flow of a lightning current caused by a lightning stroke between the coating and the lightning receptor diverters 3 are arranged.

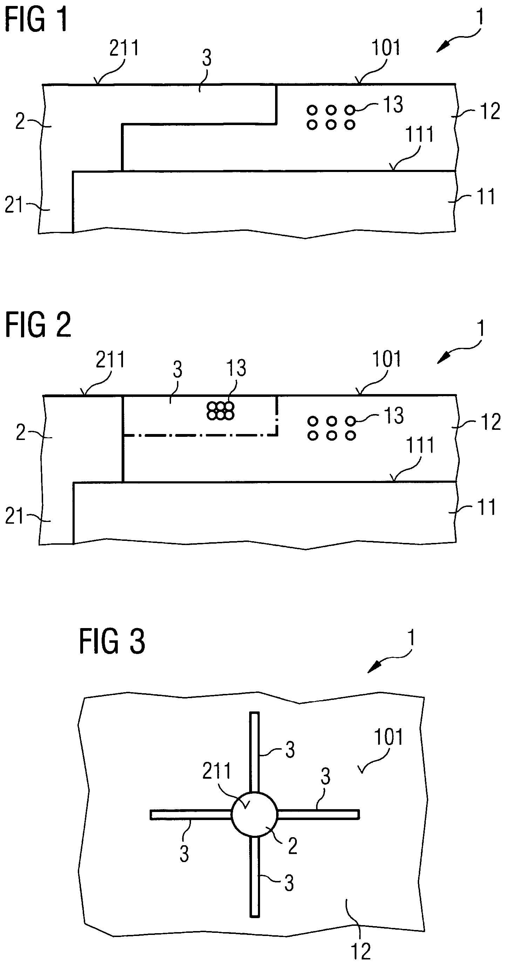

In the first embodiment (figure 1) bulk metal is arranged between the coating and the lightning receptor forming a diverter. In the second embodiment (figure 2) the diverters are formed by the conducting particles of the composite material. A higher conductivity of the diverters is reached by a compacting of the conductive particles.

In the case a lightning strikes the coating the resulting lightning current is guided via the diverters to the lightning receptor. Due to the higher resistance of the body material of the base bode of the wind turbine blade compared to the coating material of the coating no breakthrough through the base body occurs. As a result the probability of a damage of the wind turbine blade is reduced.

For manufacturing the wind turbine blade following steps are carried out: a) Providing the base body of the wind turbine blade and b) applying the coating on a surface of the base body.

The step of applying the coating comprises applying of a glass fiber mat on the surface of the base body. The glass fiber mat and the base body of the wind turbine blade are brought together. The fiber glass of the used glass fiber mat are coated with an epoxy. Therefore the glass fiber mat is impregnated with an epoxy casting resin. The epoxy coating of the glass fiber comprise the conductive particles. Therefore after impregnating the glass fiber with the epoxy resin conductive particles are deposited on the impregnated glass fiber.

## Claims

1. Wind turbine blade having
- a base body (11) with a base material and
- at least one coating (12) of the base body with a coating material, wherein
- the base material comprises a composite material with glass fiber reinforced polymer (GFRP) and
- the coating material comprises a composite material with conductive particles (13), **characterized in that**
- the composite material of the coating material comprises the base material of the base body.

2. Wind turbine blade according to claim 1, wherein the fiber glass of the coating forms a glass fiber mat.

3. Wind turbine blade according to claim 1 or 2, wherein a particle percentage of the conductive particles in the composite is selected from the range from 20 wt% to 50 wt% and in particular from 25 wt% to 40 wt%.

4. Wind turbine blade according to one of the previous claims, wherein the coating has a coating thickness selected from the range from 50 µm to 500 µm.

5. Wind turbine blade according to one of the claims 1 to 4, wherein at least a part of the conductive particles is in contact with each other.

6. Wind turbine blade according to one of the previous claims, wherein the fiber glass of the coating comprises an epoxy coating.

7. Wind turbine blade according to claim 6, wherein the epoxy coating comprises the conductive particles.

8. Wind turbine blade according to one of the previous claims, wherein the coating is electrically connected to a lightning receptor.

9. Method for manufacturing the wind turbine blade according to any of claims 1 to 8 , the method comprises following steps:
a) Providing the base body of the wind turbine blade and
b) Applying the coating on a surface of the base body.

10. Method according to claim 9, wherein step of applying the coating comprises applying of fiber glass on the surface of the base body.

11. Method according to claim 10, wherein fiber glass is used having an epoxy coating.

12. Method according to claim 11, wherein fiber glass with an epoxy coating is used having the conductive particles.

## Patentansprüche

1. Windenergieanlagen-Rotorblatt, welches aufweist:
- einen Grundkörper (11) mit einem Grundmaterial und
- wenigstens eine Beschichtung (12) des Grundkörpers mit einem Beschichtungsmaterial,
wobei
- das Grundmaterial ein Verbundmaterial mit glasfaserverstärktem Polymer (Glass Fiber Reinforced Polymer, GFRP) umfasst,
- das Beschichtungsmaterial ein Verbundmaterial mit leitfähigen Partikeln (13) umfasst,
**dadurch gekennzeichnet, dass**
- das Verbundmaterial des Beschichtungsmaterials das Grundmaterial des Grundkörpers umfasst.

2. Windenergieanlagen-Rotorblatt nach Anspruch 1, wobei die Glasfasern der Beschichtung ein Glasfaservlies bilden.

3. Windenergieanlagen-Rotorblatt nach Anspruch 1 oder 2, wobei ein Partikelanteil der leitfähigen Partikel in dem Verbundmaterial aus dem Bereich von 20 Gew.-% bis 50 Gew.-% und insbesondere von 25 Gew.-% bis 40 Gew.-% gewählt ist.

4. Windenergieanlagen-Rotorblatt nach einem der vorhergehenden Ansprüche, wobei die Beschichtung eine Beschichtungsdicke aufweist, die aus dem Bereich von 50 µm bis 500 µm gewählt ist.

5. Windenergieanlagen-Rotorblatt nach einem der Ansprüche 1 bis 4, wobei wenigstens ein Teil der leitfähigen Partikel in Kontakt miteinander steht.

6. Windenergieanlagen-Rotorblatt nach einem der vorhergehenden Ansprüche, wobei die Glasfasern der Beschichtung eine Epoxidbeschichtung umfassen.

7. Windenergieanlagen-Rotorblatt nach Anspruch 6, wobei die Epoxidbeschichtung die leitfähigen Partikel umfasst.

8. Windenergieanlagen-Rotorblatt nach einem der vorhergehenden Ansprüche, wobei die Beschichtung mit einem Blitzrezeptor elektrisch verbunden ist.

9. Verfahren zur Herstellung des Windenergieanlagen-Rotorblattes nach einem der Ansprüche 1 bis 8, wobei das Verfahren die folgenden Schritte umfasst:
a) Bereitstellen des Grundkörpers des Windenergieanlagen-Rotorblattes, und
b) Aufbringen der Beschichtung auf eine Oberfläche des Grundkörpers.

10. Verfahren nach Anspruch 9, wobei der Schritt des Aufbringens der Beschichtung das Aufbringen von Glasfasern auf die Oberfläche des Grundkörpers umfasst.

11. Verfahren nach Anspruch 10, wobei Glasfasern verwendet werden, die eine Epoxidbeschichtung aufweisen.

12. Verfahren nach Anspruch 11, wobei Glasfasern mit einer Epoxidbeschichtung verwendet werden, welche die leitfähigen Partikel aufweist.

## Revendications

1. Pale d'éolienne ayant
- un corps de base (11) avec un matériau de base et
- au moins un revêtement (12) du corps de base avec un matériau de revêtement,
dans laquelle
- le matériau de base comprend un matériau composite avec un polymère renforcé de fibre de verre (GFRP) et
- le matériau de revêtement comprend un matériau composite avec des particules conductrices (13),
**caractérisée en ce que**
- le matériau composite du matériau de revêtement comprend le matériau de base du corps de base.

2. Pale d'éolienne selon la revendication 1, dans laquelle la fibre de verre du revêtement forme un mat de fibre de verre.

3. Pale d'éolienne selon la revendication 1 ou 2, dans laquelle un pourcentage de particules des particules conductrices dans le composite est choisi dans la plage de 20% en poids à 50% en poids et en particulier de 25% en poids à 40% en poids.

4. Pale d'éolienne selon l'une des revendications précédentes, dans laquelle le revêtement à une épaisseur de revêtement choisi dans la plage de 50 µm à 500 µm.

5. Pale d'éolienne selon l'une des revendications 1 à 4, dans laquelle au moins une partie des particules conductrices sont en contact les unes avec les autres.

6. Pale d'éolienne selon l'une des revendications précédentes, dans laquelle la fibre de verre du revêtement comprend un revêtement époxy.

7. Pale d'éolienne selon la revendication 6, dans laquelle le revêtement époxy comprend les particules conductrices.

8. Pale d'éolienne selon l'une des revendications précédentes, dans laquelle le revêtement est électriquement connecté à un récepteur de foudre.

9. Procédé de fabrication de la pale d'éolienne selon l'une des revendications 1 à 8, le procédé comprend les étapes suivantes :
a) fourniture du corps de base de la pale d'éolienne et
b) application du revêtement sur une surface du corps de base.

10. Procédé selon la revendication 9, dans lequel l'étape d'application du revêtement comprend l'application de fibre de verre sur la surface du corps de base.

11. Procédé selon la revendication 10, dans lequel une fibre de verre est utilisée ayant un revêtement époxy.

12. Procédé selon la revendication 11, dans lequel une fibre de verre avec un revêtement époxy est utilisée ayant les particules conductrices.
